# EUROPEAN PATENT SPECIFICATION

(11) **EP 1 127 554 B1**
(45) Date of publication and mention of the grant of the patent: **07.05.2003**
(21) Application number: 01103230.7
(22) Date of filing: 12.02.2001
(51) Int. Cl.: A61C 7/00, A61C 7/12

(54) **Orthodontic appliance with reliable securement between stopper member and wire**
Kieferorthopädische Vorrichtung mit sicherer Befestigung zwischen Stoppteil und Drahtbogen
Appareil orthodontique disposant d'une fixation fiable entre le dispositif d'arrêt et l'arc

(30) Priority: 24.02.2000 JP 2000046967
(43) Date of publication of application: 29.08.2001
(73) Proprietor: Dekita, Teigo, Kumamoto, Japan 867-0065 (JP)
(72) Inventor: Dekita, Teigo, Kumamoto, Japan 867-0065 (JP)
(74) Representative: Prüfer, Lutz H., Dipl.-Phys.

(56) References cited:
- US-A- 4 202 100
- US-A- 4 583 944
- US-A- 5 306 142
- US-A- 5 551 871

## Description

### BACKGROUND OF THE INVENTION

### 1. Field of the Invention

The present invention relates to an orthodontic appliance according to the preamble of claim 1. More particularly, it relates to an orthodontic appliance for, e.g., correcting malocclusion of upper and lower teeth, in which any tooth displaced from its regular position is forcedly urged in, e.g., a forward direction of the mouth for a substantial time, thereby ultimately forcing the tooth into a proper position by way of positional correction.

### 2. Description of the Related Art

Teeth vital to mastication and enunciation must be aligned in a proper occlusal array in order to serve such functions. Dental malalignment and malocclusion, such as irregularly aligned teeth, excessively forward protruding anterior teeth of the upper jaw (maxillary protrusion), those of the lower jaw (mandibular protrusion), and malocclusal anterior teeth with only molars having a normal bite (apertognathia), may result in dental caries and alveolar pyorrhea as well as difficulties in mastication and pronunciation. In such a case, a dental treatment must be conducted, in which teeth in question are realigned in a proper array through tooth row correction or dental correction. In addition, an excessively forward projecting lower jaw brings about reversed occlusion, in which upper and lower wisdom teeth have a normal bite, but lower anterior teeth are protruded in a forward direction of the mouth (what is called a protruding lower lip and jaw). The reversed occlusion influences a facial appearance, and further calls for a treatment involving a skeleton operation.

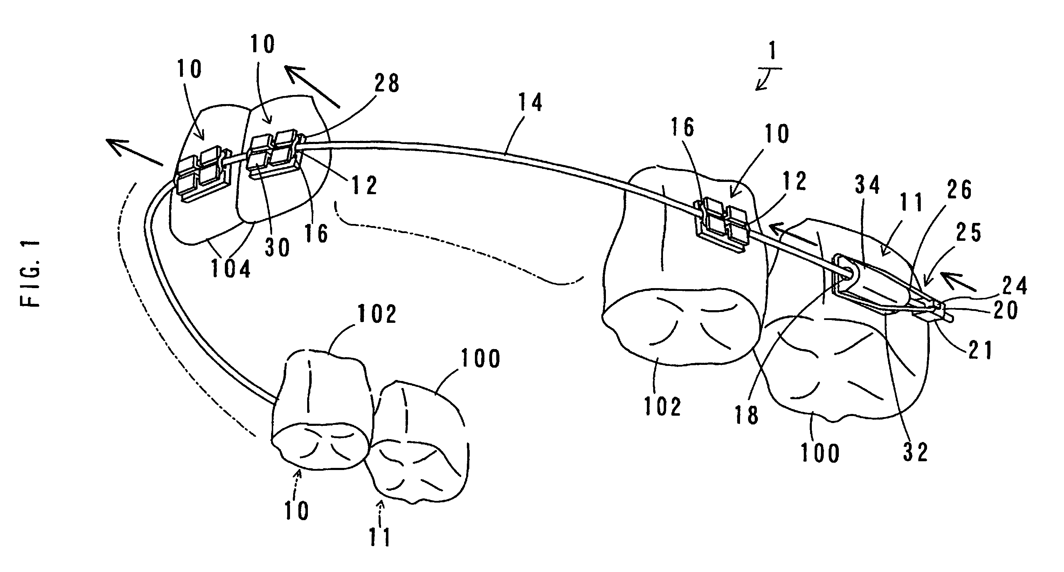

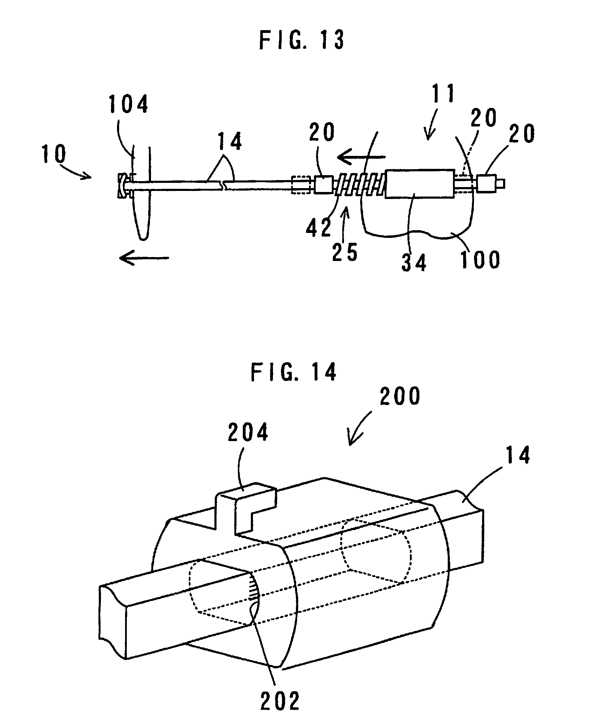

A description on, e.g., a forced treatment of the reversed occlusion heretofore practiced will now be provided with reference to a descriptive illustration of Fig. 1. Fig. 1 illustrates an embodiment of the present invention. For example, when incisors (anterior teeth) must be treated because of the reversed occlusion, then upper incisors must be forcedly caused to protrude in the forward direction of the mouth because the anterior teeth of the lower jaw are difficult to force in a backward direction of the mouth. Fig. 1 illustrates the following teeth aligned in an annular array: a wisdom tooth 100 at either side of the upper teeth; a first molar 102 in close proximity to the wisdom tooth 100; and, two incisors 104 positioned side by side with second, third, etc. molars (not shown), a stomach tooth (not shown), and a lateral incisor (not shown). First guide brackets 10 are fixedly adhered to respective surfaces of the teeth except for the wisdom teeth by means of dental adhesive resin. Each of the first guide brackets 10 is formed with a guide groove 12. An arcuately curved wire 14 is inserted into and through the guide grooves 12, and is then held against the guide grooves 12 by means of a needle wire 16 that has a small diameter. Thus, the wire 14 is permitted to span along an array of the first guide brackets 10. Similarly to the first guide brackets 10, a pair of second guide brackets 11 is rigidly affixed to respective surfaces of the molars 100 at both sides of the mouth. The second guide bracket 11 includes a barrel member having a borehole 18 drilled through a central portion thereof. Each end portion of the wire 14 is inserted through the borehole 18 in a state of being engaged therewith, and is then caused to extend outward from the second guide bracket 11. Turning now to Fig. 14, the end portion of the wire 14 is shown received in an engagement-through hole 202 of a barrel-like clipping member or stopper member 200 in a state of being engaged with the engagement-through hole 202. The stopper member 200 having the wire 14 thus fitted therein is then fixed to the wire 14 at a properly adjusted position by being caulked at both sides of the stopper member 200 in upper and lower directions thereof using dental pliers member and the like. Further, an annular silicone rubber member 26 is trained around a hook 204 and the second guide bracket 11 so as to avoid breaking loose therefrom. The hook 204 is provided on the stopper member 200 in a state of protruding outward therefrom. This arrangement allows a resilient urging force of the silicone rubber member 26 to always urge the both ends of the wire 14 in a direction in which the incisors are caused to project in the forward direction of the mouth. Thus, the use of this orthodontic appliance corrects the malaligned teeth by they being forced into a proper bite position after a lapse of, e.g., three months or greater.

As described above, since the incisors of a patient needs to be treated for such a long time in order to force them forward, a position where the stopper member 200 is fixed to the wire 14 must be determined carefully. More specifically, it is initially considered how much the patient's teeth is driven forward. Then, a position at which the stopper member 200 is fixed by caulking to the wire 14 is adjusted within fine limits by the stopper member 200 being displaced by a minute amount. This step determines an optimum position to the patient's teeth, at which the stopper member 200 and the wire 14 are rigidly secured together. For this reason, a wall of the hole 202 of the stopper member 200 cannot be knurled. As is conventional, the stopper member 200 is usually made of either a cobalt-chrome alloy wire or a stainless steel wire by way of a wire material. Similarly, the barrel-like body of the stopper member 200 is formed of a stiff material such as the cobalt-chrome alloy wire or the stainless steel wire. Consequently, even when the stopper member 200 being fixedly secured by caulking to the wire 14, such a material results in a reduction in a caulking force in a short time with elapsed time. As a result, the stopper member 200 fails to serve a stopper function, and is often insufficient to ensure the forward protrusion of the incisors.

From the US-A-4 583 944, an orthodontic device is known which uses an arch wire to connect together orthodontic brackets which are attached to the teeth. The device comprises a core member having an axial bore to permit it to be threaded onto the wire. The external face of the core member is frustro-conically shaped. The core member is pressed axially into a cylindrical sleeve having a tapered inner face complementary to the core frustro-conical outer face, and the core has a longitudinal slit in its circumference extending from the outer face to the bore so that when it is forced into the sleeve it can clamp tightly onto the wire.

In view of the above, an object of the present invention is to provide an orthodontic appliance adapted to permit a stopper member to be reliably secured by caulking to a wire at a desired position, and thus to be maintained fixed to the wire for long periods of time, and further designed to insure an urging force of an urging member on a tooth to be treated for correction.

### SUMMARY OF THE INVENTION

In order to achieve the above purpose, an orthodontic appliance according to the present invention comprises the features according to claim 1. Further advantageous features are the subject-matters of the dependent claims.

### BRIEF DESCRIPTION OF THE DRAWINGS

This and other objects, features and advantages of the present invention will become more apparent upon a reading of the following detailed description and drawings, in which:
Fig. 1 is a perspective, descriptive illustration, showing the entire arrangement of an orthodontic appliance according to the present invention as well as illustrating how the orthodontic appliance is used;
Fig. 2 is an enlarged perspective, descriptive illustration, showing a stopper member according to a first embodiment;
Fig. 3 is a longitudinal sectional, descriptive illustration, showing the stopper member before it is pressed;
Fig. 4 is an enlarged perspective, descriptive illustration, showing the stopper member after it is caulked from the outside;
Fig. 5 is a longitudinal sectional, descriptive illustration, showing the stopper member after it is pressed;
Figs. 6(a)-6(g) are illustrations, showing examples of a combination of stopper members and elongated members having many different shapes;
Fig. 7 is an enlarged perspective, descriptive illustration, showing the stopper member having a silicon rubber member held against a hook before the stopper member is caulked;
Fig. 8 is an enlarged perspective, descriptive illustration, showing the stopper member having the silicon rubber member held against the hook after the stopper member is caulked;
Fig. 9 is an descriptive illustration when viewed from the side of a tooth, showing operation of the silicon rubber member in a simulative manner in which the silicon rubber member exerts an urging force on a wire;
Fig. 10(a) is an enlarged front, descriptive illustration, showing two elongated members received in a wall of an engagement-through passage of the stopper member and positioned at symmetrically opposite positions;
Fig. 10(b) is an enlarged front, descriptive illustration, showing a plurality of elongated members received in the wall of the engagement-through passage and positioned at circumferentially spaced locations;
Fig. 11 is an enlarged front, descriptive illustration, showing a wire-grasping member portion as an annular member disposed in the wall of the engagement-through passage;
Fig. 12 is a perspective, descriptive illustration, showing the entire arrangement of an orthodontic appliance according to a second embodiment as well as illustrating how the orthodontic appliance is used;
Fig. 13 is a descriptive illustration when viewed from the side of a tooth, showing operation of an urging member in a simulative manner in which the urging member exerts an urging force on a wire; and,
Fig. 14 is a perspective, descriptive illustration, showing a prior art stopper member having a wire fixed thereto.

### DESCRIPTION OF THE PREFERRED EMBODIMENTS

Preferred embodiments of orthodontic appliances 1 according to the present invention will now be described with reference to the accompanying drawings. The same members as those of conventional orthodontic appliances are identified by the same reference characters.

Figs. 1-10 illustrate an orthodontic appliance 1 according to a first embodiment. Fig. 1 illustrate an example in which reversed occlusion is corrected by, e.g., two upper incisors 104 being forced to protrude in a forward direction of the mouth using the orthodontic appliance 1. In Fig. 1, first guide brackets 10 are fixedly adhered to respective surfaces of first molars 102 and two adjacent incisors 104 using adhesive such as dental adhesive resin. The first molars 102 are positioned in close proximity to wisdom teeth 100 at both sides of upper teeth. The incisors 104 to be treated for correction are positioned adjacent to second, third, etc. molars (not shown), stomach teeth (not shown), and lateral incisors (not shown). Similarly, a pair of second guide brackets 11 is rigidly affixed to respective surfaces of the wisdom teeth 100 by means of the above-mentioned adhesive.

The first guide bracket 10 is made of metal such as, e.g., stainless steel. This guide bracket 10 is in the form of a planar rectangular plate, which is smaller in area than respective surfaces of a plurality of teeth including the incisors 104. The first guide bracket 10 includes a substrate 28 and four L-shaped angle members 30 positioned on the substrate 28. The substrate 28 is directly adhered to a tooth surface. The L-shaped angle members 30 have respective angle walls arranged in an opposed relationship to each other so as to form a guide groove 12 at a central portion of the substrate 30 in a direction along an array of the teeth. The second guide bracket 11 includes a stainless steel base 32 and a barrel member 34. The base 32 is directly fixed and adhered to the tooth surface. The barrel member 34 is rigidly secured to the base 32. The barrel member 34 includes a borehole 18. The borehole 18 is oriented in the direction of a row of the teeth for guiding a wire 14 into the borehole 18.

The wire 14 is a wire material similar in rigidity to a stainless steel piano wire. The wire 14 is inserted through the borehole 18 of the second guide bracket 11, and an end portion of the wire 14 is thereby caused to extend outward from the second guide bracket 11. The wire 14 is further received in the respective guide grooves 12 of the first guide brackets 10, and is thereby held against the guide grooves 12. In this way, the wire 14 is held in slidable engagement with the first and second guide brackets 10, 11, and is thereby stretched out to extend over the surfaces of the teeth in an arcuate fashion.

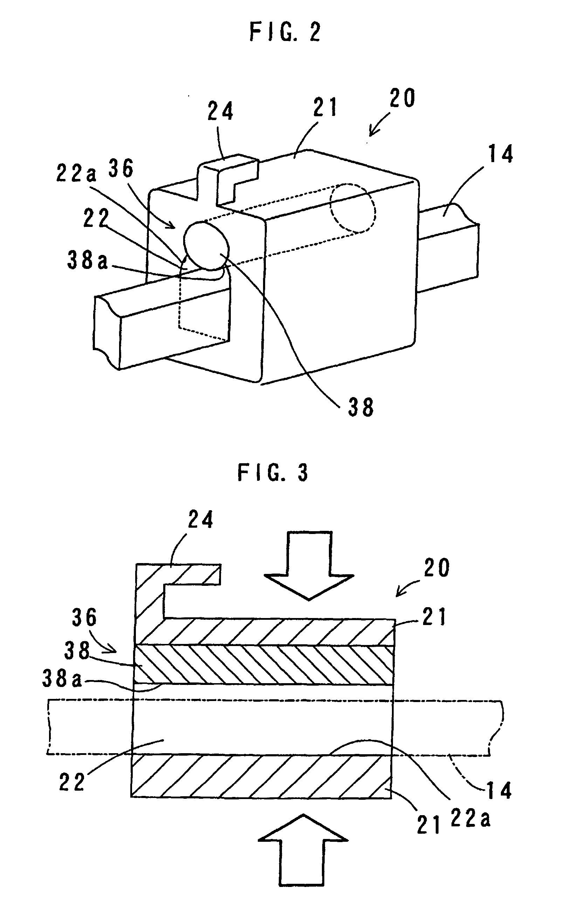

A stopper member 20 is positioned on the above-mentioned outwardly extending end portion of the wire 14. The stopper member 20 is rigidly secured by caulking to the wire 14 at a proper position by both sides of the stopper member 20 being pressed under high pressure using dental pliers member or equivalent. The stopper member 20 is a clipping member for use in dental applications. Referring now to Fig. 2, the stopper member 20 is shown including a stainless steel, angulated cylindrical body block 21. This body block 21 has an engagement-through passage 22 formed therein as a borehole, through which the wire 14 extends. As illustrated in Fig. 2, the stopper member 20 according to the present embodiment has a projecting hook 24 fixedly secured thereto.

A loop-like or rubber band-like silicone rubber member 26 serving as an urging member 25 is positioned in advance between the second guide bracket 11 and the first molar 102 in a state of being engaged therewith. Then, the silicone rubber member 26 is stretched out so as to be held against the hook 24. Thus, the silicone rubber member 26 is entrained around the hook 24 and the second guide bracket 11. This arrangement allows a fixed end of the wire 14 to be pushed in a direction in which the upper incisors 104 are caused to project forward. More specifically, the silicone rubber member 26 reeved between the hook 24 and the second guide bracket 11 exerts an urging force on the wire 14 in a direction in which one end of the wire 14 is urged toward a curvedly convex portion of the wire 14. As a result, when the above-described orthodontic appliance 1 is maintained affixed to the teeth for long periods of time such as, e.g., three months or longer, then the upper incisors 104 are successfully corrected, and are thus stood out in the forward direction of the mouth.

One of features of the present invention is that the stopper member 20 includes an annular metal or alloy body block 21 with or without a cutout and a wire-grasping member portion 36 made of a super-resilient alloy material. The body block 21 has the engagement-through passage 22 formed therein, through which the wire 14 is positioned. The wire-grasping member portion 36 is received in a wall 22a of the engagement-through passage 22. In the present embodiment, the body block 21 is a stainless steel molded body whose outer appearance is in the form of an angulated cylinder. In addition, the engagement-through passage 22 is provided through a hollow portion of the body block 21. Alternatively, the body block 21 may be formed into any configuration other than an annularly continuous molded body. For example, a partially discontinuous molded body or structure having a cutout portion formed therein is acceptable. Furthermore, a material of the body block 21 may include any metal or alloy material other than stainless steel, provided that such a material produces no toxicity in the mouth cavity.

In the present embodiment, the wire-grasping member portion 36 includes an elongated member 38. The elongated member 38 is a wire material fabricated from a super-resilient alloy such as, e.g., a nickel-titanium alloy or a molybdenum-titanium alloy. In Figs. 2 and 3, the elongated member 38 is fixedly jointed to the wall 22a in the stainless steel body block 21, while being oriented in a direction in which the wire 14 is inserted through the engagement-through passage 22 in a state of being engaged therewith. In this case, the elongated member 38 is laid in such a manner as to be partially exposed to the engagement-through passage 22. The body block 21 is in the form of the angulated cylinder whose one side is, e.g., some millimeter long. The elongated member 38 has, e.g., the same length as length "h" of the angulated block-shaped body 21 in the direction in which the wire 14 extends, and is thus some millimeters long. The elongated member 38 having a high level of hardness may be fixed to the wall 22a in a state of being partially embedded in the wall 22a by means of, e.g., a press so as to permit a biasing press surface 38a of the elongated member 38 on the wire 14 to be exposed to the engagement-through passage 22. Alternatively, the body block 21 may be preformed with a groove in which part of the elongated member 38 is fitted, thereby forcing the elongated member 38 to be fixedly jointed to the groove. As a further alternative, the elongated member 38 and the body block 21 may be fixedly jointed together by means of plasma jet welding, electron beam welding, or laser welding. In addition, they may be fixed together by means of an adhesive.

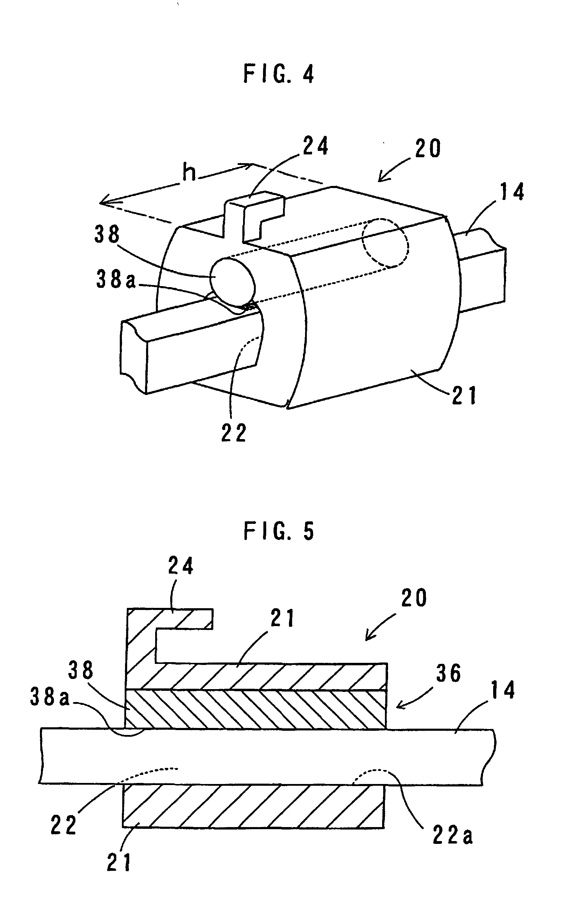

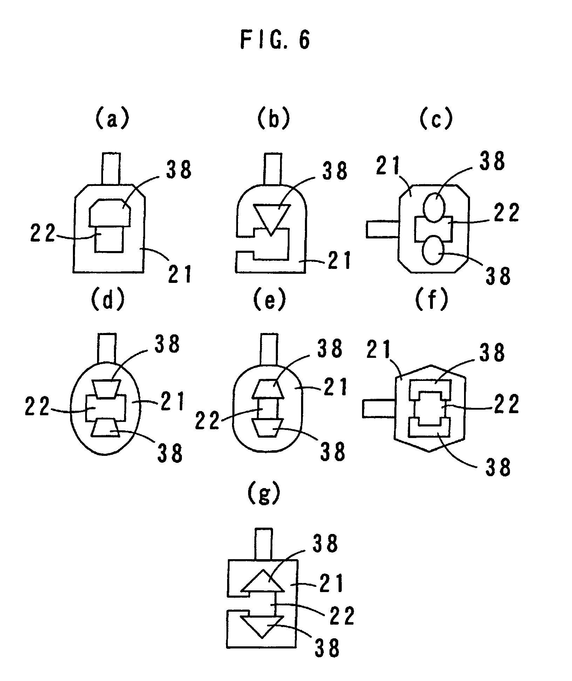

The super-resilient alloy elongated member 38 possesses a stress-inducing martensite transformation property. In this property, the elongated member 38 distorted by external stresses beyond the limit of resiliency thereof is caused to return to its original shape because of the absence of deformation-raising strain when the external stresses are eliminated from the elongated member 38. Even when the elongated member 38 in the body block 21 is strained in union with the body block 21 as illustrated in Figs. 4 and 5 after the stopper member 20 having the wire 14 inserted through the engagement-through passage 22 is pressed by caulking in the directions as indicated by arrows in Fig. 3, then the preceding property permits the elongated member 38 not to be fully plastically deformed, but to spring back to its original shape when a caulking force is released from the elongated member 38. As a result, the elongated member 38 is maintained in elastically pressing contact with the wire 14. This state ensures that the stopper member 20 remains fixed to the wire 14 at a certain position for long periods of time after the above caulking operation using the pliers member and the like. Such a positively fixed state of these two components 20 and 14 allows the silicon rubber member 26 serving as an urging member to operatively impart a resilient biasing force to the wire 14. Consequently, the curvedly convex portion of the wire 14 is caused to protrude forward over an extended time of period, thereby practicing a required treatment of the teeth for correction. The elongated member 38 may be a square-cornered barrel body having a square-cornered cross-section as well as being a cylindrical body having a circular cross-section. Further, in order to permit super-resiliency of the super-resilient alloy material to operatively acts on the wire 14 when the external stresses are liberated from the elongated member 38, the elongated member 38 may be of an elliptical shape, a longer rectangular shape, or any other possible shape, whose a cross-section is made longer in a direction in which the elongated member 38 is pressed.

Pursuant to the present embodiment, the body block 21 is preformed with the groove in which part of the elongated member 38 is fitted, thereby causing the elongated member 38 to be fixedly jointed to the body block 21 in a state of being partially embedded in the body block 21. Alternatively, the body block 21 and the wire-grasping member portion 36 may be formed as one-piece, if possible, by a portion at which these two components 21 and 36 are jointed together being welded.

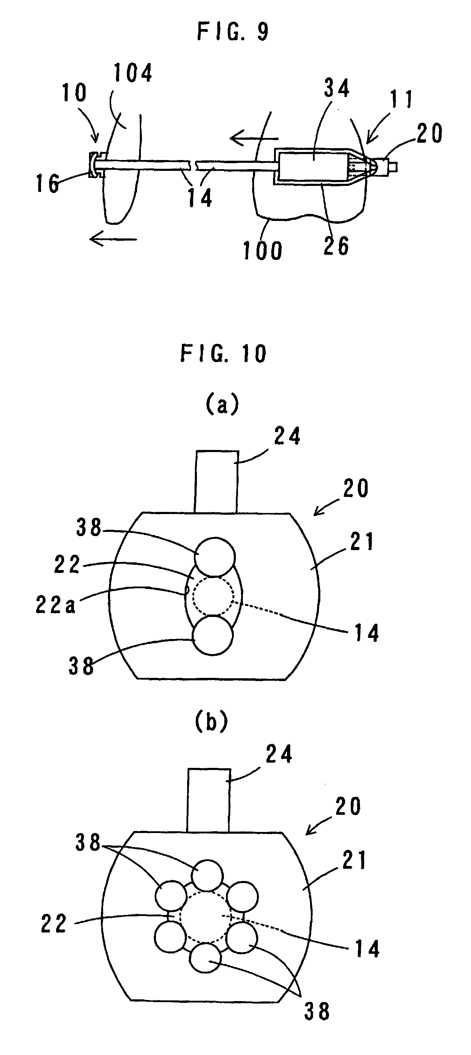

As shown in Fig. 10(a), two elongated members 38 may be disposed at symmetrically opposite positions in order to sandwich the wire 14 therebetween. Alternatively, as illustrated in Fig. 10(b), a plurality of elongated members 38 may be circumferentially spaced apart from each other at required definite intervals.

The wire-grasping member portion 36 is not necessarily formed as the elongated member 38. It may be formed as a sphere, a rectangular parallelopiped, or other block-like object, each of which is received in the wall 22a by being fitted to, snugly attached to, pressed against, or welded to the preceding wall 22a. Further, the body block 21 and the elongated member 38 may take any patterns of the entire shapes as well as cross-sectional shapes. Figs. 6(a)-6(g) illustrate examples of many different shapes of the stopper members 20 and elongated members 38. In addition, a combination of any other shapes is acceptable. In Figs. 6(b) and 6(g), the body block 21 is shown formed with a cutout communicated to the wall 22a. This configuration allows the wire 14 to be inserted into the engagement-through passage 22 from the outside of the stopper member 20 through the above-mentioned cutout in a direction transverse to an axial direction of the wire 14 when the wire 14 is fitted into the stopper member 20. Thus, the wire 14 can readily be snapped into stopper member 20.

In short, the wire-grasping member portion 36 ensures that the wire 14 and the stopper member 20 remain fixed together for a fair length of time by virtue of the tendency of the wire-grasping member portion 36 distorted by external stresses beyond the limit of resiliency thereof to return to its original shape and then to continue to grasp the wire 14 in response to release of the external stresses from the wire-grasping member portion 36. In the first embodiment, the wire-grasping member portion 36 formed by the elongated member 38 is embedded in the body block 21. Alternatively, in view of the above-described tendency of the wire-grasping member portion 36, the elongated member 38 may be positioned through, e.g., the engagement-through passage 22 in a state of being engaged therewith. In this case, both ends of the elongated member 38 are lengthened, and are then folded down to the side surfaces of the body block 21 so as to be held against such side surfaces.

Next, operation of the orthodontic appliance 1 according to the first embodiment will be described. In corrective treatment to force two incisors 104 in the forward direction of the mouth, the second guide bracket 11 is fixedly adhered to the surface of the wisdom tooth 100 at either side of the upper teeth by means of an adhesive, while the first guide brackets 10 are rigidly affixed to the respective surfaces of other teeth such as first, second molars, and so on. The wire 14 is inserted through the silicon rubber member 26. The silicon rubber member 26 is positioned between the first molar 102 and the wisdom tooth 100. Then, the wire 14 is inserted into and through the hole 18 of the second guide bracket 11, and is further engaged with the respective guide grooves 12 of the first guide brackets 10. In this state, the end portion of the wire 14 in an outwardly extending direction of the second guide bracket 11 is positioned through the engagement-through passage 22 of the stopper member 20. Then, as illustrated in Fig. 3, the stopper member 20 is pressed from the outside by means of dental pliers or equivalent at a position somewhat spaced apart from the second guide bracket 11. Such pressing strains the super-resilient alloy material elongated member 38 that is buried in the wall 22a of the engagement-through passage 22. However, the property of the elongated member 38 causes the elongated member 38 to spring back to its original shape when a pressing force is liberated from the elongated member 38. As a result, as shown in Fig. 5, the elongated member 38 continues to resiliently press the wire 14. This ensures that the elongated member 14 and the wire 14 remain fixed together without allowing the stopper member 20 to be displaced in a longitudinal direction of the wire 14 irrespective of a time lapse.

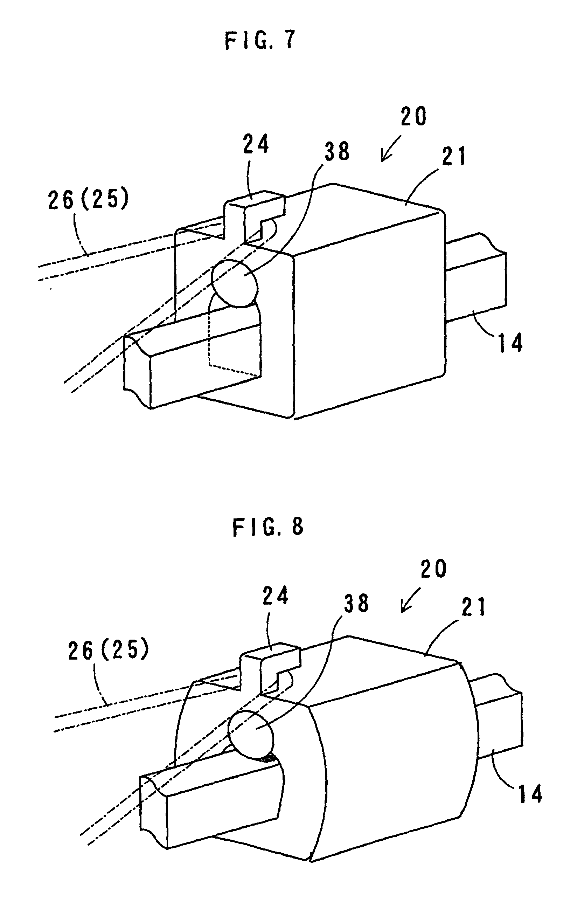

The annular silicon rubber member 26 located at a portion of the wire 14 between the first molar 102 and the wisdom tooth 100 and further having the wire 14 inserted through the silicon rubber member 26 is forcedly spanned so as to hold one end of the silicon rubber member 26 against the hook 24 of the stopper member 20, as illustrated in Fig. 7. The silicon rubber members 26 thus disposed at both sides of the upper teeth always impose urging forces on the wire 14 in directions in which both distal ends of the wire 14 are biased toward the curvedly convex portion of the wire 14. (See Fig. 9.) Thus, the teeth to be treated are corrected through the above-described treatment for a long time such as, e.g., about three months or longer, with the result that the teeth are brought into a desired corrective position. It is to be noted that the stopper member 20 may be unitarily formed with the second guide bracket 11 in series therewith by these two components 11 and 20 being affixed or fitted together, although not being illustrated in the drawings. In this case, the wire 14 can be provided through the second guide bracket 11 and the stopper member 20 in a state of being serially engaged therewith. As a result, a reduction in time of orthodontia as well as easy control of components is achievable.

Although the positional correction to force the two incisors forward is exemplified in the first embodiment, similar positional correction for other teeth such as lateral incisors, stomach teeth, and molars is also achievable by, e.g., the stopper member 20 being fixed to the wire 14 at a predetermined position. The hook 24 may be selectively provided or eliminated, depending upon how the urging force is exerted on the wire 14. In addition, the hook 24 is not limited to forming a L-shape, but may have any configuration or shape such as to permit the urging member 26 to be positively held in engagement with the hook 24. Further, although the treatment of the upper teeth is exemplified in the present embodiment, similar treatment of the lower teeth is also attainable. Moreover, the first and second guide brackets 10, 11 according to the first embodiment are firmly secured to the obverse sides of the teeth, but may also be fixed to the reverse sides thereof, when desired. Yet further, the urging member 26 is not limited to an annular rubber piece or a spring, but may be any one of other mechanisms designed to provide the urging force. Furthermore, any annular rubber piece or spring member, which acts as an urging member, may be connected to the second guide bracket 11 in advance by one end of the above annular rubber piece or spring member being directly held against the second guide bracket 11.

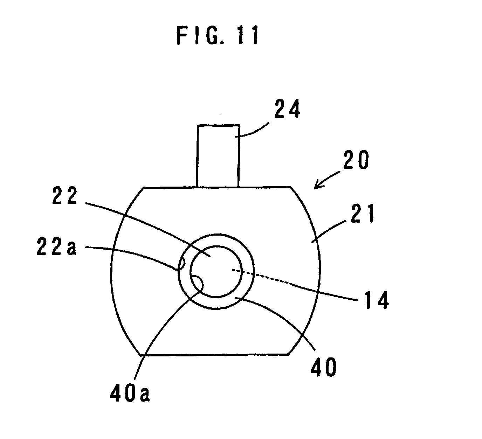

Fig. 11 illustrates another example of a differently structured wire-grasping member portion 36. The wire-grasping member portion 36 according to this example includes an annular member 40 disposed in the engagement-through passage 22 in a state of being fitted to the wall 22a of the engagement-through passage 22. In this example, the annular member 40 is formed by a hollow cylinder, which is made of a super-resilient alloy material, and further which has a hole 40a formed at a central portion thereof. In this case, an inner wall portion of the annular member 40 forms a biasing press surface to be brought into direct abutment with an outer surface of the wire 14. In Fig. 11, the hole 40a of the annular member 40 functions as a further engagement-through passage, through which the wire 14 is actually inserted in a state of being engaged with the further engagement-through passage. Even when the wire-grasping member portion 36 is formed into such an annular configuration, the annular member 40 possesses the stress-inducing martensite transformation property. Therefore, the annular member 40 distorted by external stresses beyond the limit of resiliency thereof is caused to spring back to its original shape because of the absence of deformation-raising strain when the external stresses are liberated from the annular member 40. The stopper member 20 having the wire 14 inserted through the through-hole 40a is pressed at outer surface portions of the stopper member 20, which stopper member 20 is made of a material having rigidity, such as stainless steel. Consequently, the body block 21 is strained, while simultaneously the annular member 40 is also distorted, thereby causing the wire 14 to be caulked at outer surface portions thereof. Thereafter, when such a pressing force is eliminated from the stopper member 20, then the annular member 40 is not fully plastically deformed, but is permitted to return its original shape. As a result, the wire 14 is maintained elastically pressed by the annular member 40, and thus the stopper member 20 positively remains rigidly secured to the wire 14 at a predetermined position for long periods of time.

In the example of Fig. 11, the annular member 40 is received in the engagement-through passage 22 in a state of being attached thereto with a snug fit. Alternatively, length "h" of the annular member 40 in a direction in which the wire 14 is inserted therethrough may be made smaller than a length of the body block 21, thereby permitting part of the biasing press surface of the annular member 40 on the outer surface of the wire 14 to be exposed. In this state, the annular member 40 may be monolithically provided in the body block 21 in a state of being partially embedded therein.

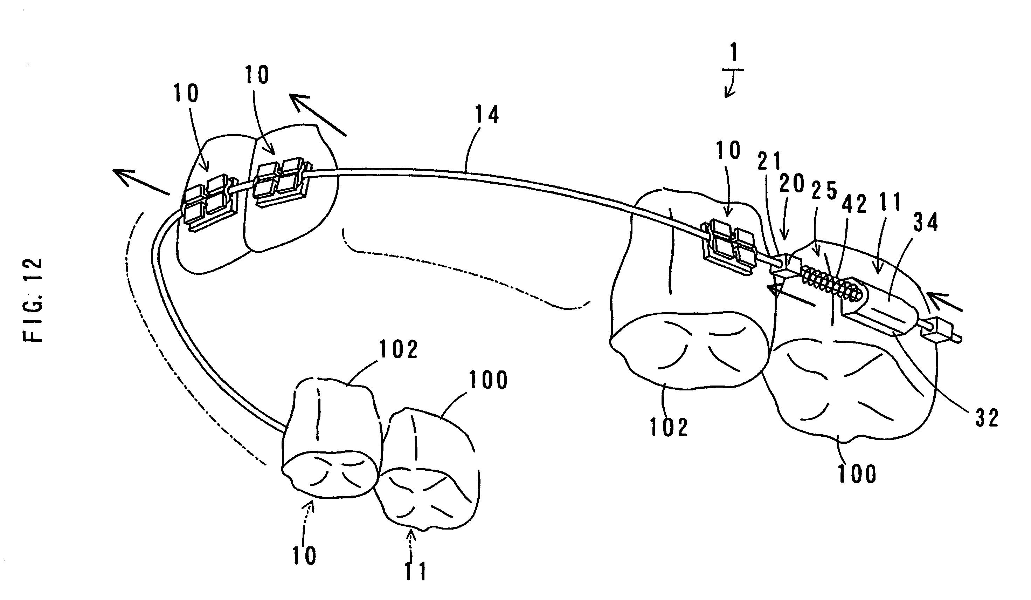

Next, another embodiment of an orthodontic appliance 1 will be described. In this embodiment, the same members as those in the first embodiment are identified by the same reference characters, and detailed descriptions related thereto will be omitted. Fig. 12 is a descriptive illustration, showing the orthodontic appliance 1 according to the second embodiment. In the present embodiment, two stopper members 20 are fixed by caulking to a wire 14 at either side of the upper teeth. More specifically, one of the stopper members 20 is positioned at one end of the wire 14 in an outwardly extending direction of a second guide bracket 11, while the other stopper member 20 is located between the second guide bracket 11 and a first molar 102. In addition, an urging member 25 having the wire 14 passing therethrough is positioned between the other stopper member 20 and the second guide bracket 11. The urging member 25 is formed by a coiled spring 42 that acts as a helical compression spring. The stopper member 20 at the above-mentioned outwardly extending one end of the wire 14 serves as a fixed end of the wire 14 for restricting an amount of forward movement of a curvedly convex portion of the wire 14, i.e., an amount of movement of incisors to be caused to protrude forward. This is because the above-identified stopper member 20 acting as the fixed end of the wire 14 is allowed to move only until impinging on the second guide bracket 11. The wire 14 is free to slide with respect to the second guide bracket 11. Thus, as indicated by arrows in Figs. 12 and 13, the other stopper member 20 fixed to the wire 14 at a substantially intermediate position between the first molar 102 and the wisdom tooth 102 always experiences an urging force of the coiled spring 42 in a direction in which the stopper member 20 is urged and pushed. As a result, a portion of the wire 14 where the stopper member 20 is fixed thereto is always urged in the direction toward the curvedly convex portion of the wire 14. In this way, the teeth to be treated are corrected for a long time so as to be urged to a desired corrective position. In this case, unlike the first embodiment, no hook 24 is provided on the stopper member 20. Instead, a combination of the stopper member 20 and the urging member 25 or coiled spring 42 makes it possible to ensure the urging force sufficient to thrust the curvedly convex portion of the wire 14 in the forward direction of the mouth.

Although the embodiments of the orthodontic appliances according to the present invention have been described, the present invention is not limited to the same. It will be recognized that variations or modifications of the disclosed device may be made without departing from the sprits and scope of the present invention as encompassed in the appended claims.

As previously described, the orthodontic appliance according to the present invention includes: the guide brackets fixedly adhered to either the obverse or reverse sides of a plurality of teeth including a tooth to be treated for correction; the curved wire held in slidable engagement with the respective guide brackets and arcuately positioned over either the obverse or reverse sides of the teeth; the stopper member fixed by caulking to the wire at a required position in a longitudinal direction of the wire; and, the urging member cooperative with the stopper member for urging one end of the wire in a direction toward the curvedly convex portion of the wire, the improvement wherein the stopper member comprises the annular metal or alloy body block with or without the cutout, the body block having the engagement-through passage formed therein, through which the wire is inserted, and the wire-grasping member portion made of a super-resilient alloy material, the wire-grasping member portion being received in the wall of the engagement-through passage. This arrangement permits the stopper member to be reliably secured by caulking to the wire at a desired position, and thus to be maintained fixed to the wire for a fair length of time. The above arrangement is thus able to insure an urging force of the urging member on the tooth to be treated for correction. As a result, operative orthodontia is achievable.

The wire-grasping member portion is formed by an elongated member jointed to the wall of the engagement-through passage in the body block in a direction in which the wire is inserted through the engagement-through passage in a state of being engaged therewith. This structure allows the wire-grasping member portion to be positively fixedly jointed to the inside of the wall of the engagement-through passage at inexpensive cost. In addition, operation of the super-resilient alloy member to return to its original shape is operatively usable as a wire-grasping action.

The elongated member is jointed to the wall of the engagement-through passage in the body block at circumferentially spaced intervals. This construction permits a further operative wire-grasping force to be generated by virtue of the operation of the super-resilient alloy member to return to its original shape. As a result, the elongated member and the wire can be maintained fixed together for long periods of time, and orthodontia such as forward protrusion of teeth to be treated and other corrections can be rendered operative.

The wire-grasping member portion is formed by an annular member disposed in the engagement-through passage in a state of being either fitted to or partially embedded in the wall of the engagement-through passage. In addition, the annular member includes a hole serving as a further engagement-through passage, through which the wire is inserted in a state of being engaged with the further engagement-through hole. This structure allows a further operative wire-grasping force to be generated by virtue of the operation of the super-resilient alloy member to spring back to its original shape. As a result, the annular member and the wire can be maintained fixed together for a long time, and orthodontia such as forward protrusion of teeth to be treated and other corrections can be rendered operative.

In addition, the stopper member is provided with an interlocking piece for holding the urging member thereagainst. Consequently, the urging member formed as that of any type such as an annular or linear rubber piece and a spring readily provides an urging force-imparting arrangement that cooperates with the stopper member.

## Claims

1. An orthodontic appliance including:
guide brackets (10, 11) fixedly adherable to one of obverse and reverse sides of a plurality of teeth (100, 102, 104) including a tooth to be treated for correction;
a curved wire (14) held in slidable engagement with said respective guide brackets and arcuately positionable over one of the obverse and reverse sides of the teeth;
a stopper member (20) fixed by caulking to said wire at a required position in a longitudinal direction of said wire; and,
an urging member (25) cooperative with said stopper member (20) for urging one end of said wire (14) in a direction toward a curvedly convex portion of said wire,
said stopper member (20) comprises one of an annular body block (21) with a cutout and an annular body block without the cutout, said body block (21) being made of one of metal and alloy, said body block further having an engagement-through passage formed (22) in said body block, through which said wire (14) is inserted, and a wire-grasping member portion being received in a wall (22a) of said engagement-through passage (22), **characterized in that** said wire-grasping member portion (36) is made of a super-resilient alloy material, which springs back to its original shape when coulking force is released.

2. An orthodontic appliance as defined in claim 1, wherein said wire-grasping member portion (36) is an elongated member (38) jointed to said wall (22a) of said engagement-through passage (22) in said body block (21) in a direction in which said wire (14) is inserted through said engagement-through passage (22) in a state of being engaged with said engagement-through passage.

3. An orthodontic appliance as defined in claim 2, wherein said elongated member (38) is jointed to said wall (22a) of said engagement-through passage (22) in said body block (21) at circumferentially spaced intervals.

4. An orthodontic appliance as defined in claim 1, wherein said wire-grasping member portion (36) is an annular member (40) disposed in said engagement-through (22) passage in a state of one of being fitted to said wall (22a) of said engagement-through passage (22) and partially embedded in said wall of said engagement-through passage, and wherein said annular member includes a hole (40a) serving as a further engagement-through passage, through which said wire is inserted in a state of being engaged with said further engagement-through passage.

5. An orthodontic appliance as defined in any one of claims 1-4, wherein said stopper member (20) is provided with an interlocking piece for holding said urging member (25) against said interlocking piece.

## Patentansprüche

1. Kieferorthopädische Vorrichtung, enthaltend:
Führungsträger (10, 11), die an einer Vorderseite oder der Rückseite einer Mehrzahl von Zähnen (100, 102, 104), die einen für die Korrektur zu behandelnden Zahn enthalten, anklebbar sind;
einen gekrümmten Draht (14), der in verschieblichem Eingriff mit den jeweiligen Führungsklammern gehalten wird und über eine der vorderen und hinteren Seiten der Zähne gekrümmt positionierbar ist;
ein Stoppteil (20), das durch Verstemmen an dem Draht in einer erforderlichen Position in einer Längsrichtung des Drahtes befestigt ist; und
ein drängendes Bauteil (25), das mit dem Stoppteil (20) zusammenarbeitet, um ein Ende des Drahtes (14) in eine Richtung zu einem gekrümmt konvexen Abschnitt des Drahtes zu drängen,
wobei das Stoppteil (20) einen aus einem ringförmigen Körperblock (21) mit einem Ausschnitt und aus einem ringförmigen Körperblock ohne dem Ausschnitt aufweist, wobei der Körperblock (21) aus Metall oder einer Legierung hergestellt ist, wobei der Körperblock des weiteren eine Eingriffsdurchgangspassage (22) besitzt, die in dem Körperblock ausgebildet ist, durch die der Draht (14) eingesetzt wird, und einen drahtergreifenden Bauteilabschnitt, der in einer Wand (22a) der Eingriffsdurchgangspassage (22) aufgenommen ist, **dadurch gekennzeichnet, daß** der drahtergreifende Bauteilabschnitt (36) aus einem superelastischen Legierungsmaterial hergestellt ist, das in seine Ursprungsgestalt zurückfedert, wenn die Verstemmkraft gelöst wird.

2. Kieferorthopädische Vorrichtung gemäß Anspruch 1, wobei der drahtergreifende Bauteilabschnitt (26) ein langgestrecktes Bauteil (38) ist, das mit der Wand (22a) der Eingriffsdurchgangspassage (22) in dem Körperblock (21) in einer Richtung verbunden ist, in der der Draht (14) durch die Eingriffsdurchgangspassage (22) eingesetzt wird, in einem Zustand, in dem er mit der zweiten Eingriffsdurchgangspassage in Eingriff steht.

3. Kieferorthopädische Vorrichtung gemäß Anspruch 2, wobei das langgestreckte Bauteil (38) mit der Wand (22a) der Eingriffsdurchgangspassage (22) in dem Körperblock (21) an am Umfang beabstandeten Intervallen verbunden ist.

4. Kieferorthopädische Vorrichtung gemäß Anspruch 1, wobei der drahtergreifende Bauteilabschnitt (36) ein ringförmiges Bauteil (40) ist, das in der Eingriffsdurchgangspassage (22) in einem Zustand angeordnet ist, in dem es an der Wand (22a) der Eingriffsdurchgangspassage (22) befestigt ist und teilweise in der Wand der Eingriffsdurchgangspassage eingebettet ist und wobei das ringförmige Bauteil ein Loch (40a) enthält, das als weitere Eingriffsdurchgangspassage dient, durch die der Draht in einem Zustand eingesetzt wird, in dem er mit der weiteren Eingriffsdurchgangspassage in Eingriff gebracht wird.

5. Kieferorthopädische Vorrichtung gemäß einem der Ansprüche 1 bis 4, wobei das Stoppteil (20) mit einem Verriegelungsstück versehen ist, um das drängende Bauteil (25) gegen das Verriegelungsstück zu halten.

## Revendications

1. Appareil orthodontique comprenant :
des brides de guidage (10, 11) capables d'adhérer de manière fixe à l'un des côtés recto et verso d'une pluralité de dents (100, 102, 104) dont une dent à traiter en vue de sa correction ;
un fil de fer recourbé (14) tenu de façon à pouvoir être mis en prise par glissement avec lesdites brides de guidage respectives et pouvant être positionné de manière précise sur l'un des côtés recto et verso des dents ;
un élément de butée (20) fixé par matage audit fil de fer au niveau d'une position requise dans un sens longitudinal dudit fil de fer ; et
un élément de poussée (25) coopérant avec ledit élément de butée (20), pour pousser de force une extrémité dudit fil de fer (14) dans un sens vers une partie convexe courbée dudit fil de fer,
ledit élément de butée (20) comprenant un bloc support annulaire (21) avec une découpe, et un bloc support annulaire sans la découpe, ledit bloc support(21) étant composé d'un élément parmi un métal et un alliage, ledit bloc support comprenant par ailleurs un passage permettant la mise en prise formé dans ledit bloc support par lequel est inséré ledit fil de fer (14), et la partie formant élément de saisie du fil de fer étant reçue dans une paroi (22a) dudit passage permettant la mise en prise (22), **caractérisé en ce que** ladite partie (36) formant élément de saisie du fil de fer est composée d'un matériau en alliage super résistant, qui reprend sa forme initiale quand la force de matage est libérée.

2. Appareil orthodontique selon la revendication 1, dans lequel ladite partie formant élément de saisie du fil de fer (36) est un élément allongé (38) articulé sur ladite paroi (22a) dudit passage permettant la mise en prise (22) dans ledit bloc support (21) dans un sens dans lequel ledit fil de fer (14) est inséré à travers ledit passage permettant la mise en prise (22) dans un état d'engagement avec ledit passage permettant la mise en prise.

3. Appareil orthodontique selon la revendication 2, dans lequel ledit élément allongé (38) est articulé sur ladite paroi (22a) dudit passage permettant la mise en prise (22) dans ledit bloc support (21) à intervalles espacés sur la circonférence.

4. Appareil orthodontique selon la revendication 1, dans lequel ladite partie formant élément de saisie du fil de fer (36) est un élément annulaire (40) disposé dans ledit passage permettant la mise en prise (22), dans un état où l'une est en cours de montage sur ladite paroi (22a) dudit passage permettant la mise en prise (22) et partiellement encastrée dans ladite paroi dudit passage permettant la mise en prise, et dans lequel ledit élément annulaire comprend un trou (40a) servant de passage supplémentaire permettant la mise en prise, au travers duquel ledit fil de fer est inséré dans un état en cours de mise en prise avec ledit autre passage permettant la mise en prise.

5. Appareil orthodontique selon l'une quelconque des revendications 1 à 4, dans lequel ledit élément de butée (20) est doté d'une pièce de verrouillage destinée à maintenir ledit élément de poussée (25) contre ladite pièce de verrouillage.
